# EUROPEAN PATENT SPECIFICATION

(11) **EP 4 432 402 B1**
(45) Date of publication and mention of the grant of the patent: **30.09.2026**
(21) Application number: 23865749.8
(22) Date of filing: 21.08.2023
(51) Int. Cl.: H01M 4/62, H01M 4/04, C08J 3/12, C08L 27/18, C08L 33/12, C08L 33/08, C08L 33/02, C08F 259/08, C09D 151/00, H01M 4/13, H01M 10/052

(54) **BINDER FOR LITHIUM SECONDARY BATTERY AND ELECTRODE USING SAME FOR LITHIUM SECONDARY BATTERY**
BINDEMITTEL FÜR LITHIUMSEKUNDÄRBATTERIE UND ELEKTRODE DAMIT FÜR LITHIUMSEKUNDÄRBATTERIE
LIANT POUR BATTERIE SECONDAIRE AU LITHIUM ET ÉLECTRODE L'UTILISANT POUR BATTERIE SECONDAIRE AU LITHIUM

(30) Priority: 15.09.2022 KR 20220116479
(43) Date of publication of application: 18.09.2024
(73) Proprietor: LG Energy Solution, Ltd., Seoul 07335 (KR); LX MMA CORP., Yeosu-si, Jeollanam-do 59613 (KR)
(72) Inventor: KIM, Taegon, Daejeon 34122 (KR); KIM, Myeongsoo, Daejeon 34122 (KR); JEON, Seong Jang, Daejeon 34122 (KR); KANG, Da Hyun, Daejeon 34122 (KR); PARK, Sung Il, Daejeon 34122 (KR); KIM, Bubsung, Daejeon 34122 (KR); LEE, Choonghyeon, Daejeon 34122 (KR); SONG, Min Sang, Daejeon 34122 (KR)
(74) Representative: Goddar, Heinz J.
(86) International application number: PCT/KR2023/012316
(87) International publication number: WO 2024/058450

(56) References cited:
- EP-A1- 4 549 478
- WO-A1-2022/015119
- WO-A1-2022/131852
- CN-A- 110 128 597
- CN-A- 110 818 844
- KR-A- 20140 136 952
- KR-B1- 100 201 056
- KR-B1- 100 854 239
- KR-B1- 101 597 745
- US-A1- 2011 040 039
- US-A1- 2021 070 974
- CUI XUEJUN ET AL: "Synthesis of polytetrafluoroethylene/polyacrylate core-shell nanoparticles via emulsifier-free seeded emulsion polymerization", COLLOID & POLYMER SCIENCE, SPRINGER VERLAG, HEIDELBERG, DE, vol. 285, no. 8, 17 February 2007 (2007-02-17), pages 935 - 940, XP037838318, ISSN: 0303-402X, [retrieved on 20070217], DOI: 10.1007/S00396-007-1651-7

## Description

### [Technical Field]

The present invention relates to an electrode for a lithium secondary battery. In specific, it relates to an electrode for a lithium secondary battery comprising a binder comprising polytetrafluoroethylene modified with an acrylic polymer.

### [Background Art]

As the technology development and the demand for mobile devices increase, the demand for secondary batteries as an energy source is rapidly increasing. Among secondary batteries, lithium secondary batteries with high energy density and voltage, long cycle life, and low self-discharge rate have been widely used in commercial.

In the manufacture of an electrode for a lithium secondary battery, an electrode active material, a conductive material and a binder are mixed to prepare a mixture comprising an electrode active material. After applying the mixture to an electrode current collector, the mixture is pressurized using equipment such as a roll to produce an electrode. When a binder, such as polytetrafluoroethylene (PTFE), is pressurized by a roll, fiberization proceeds as the shear force is applied around the surface in contact with the roll. This fiberization is made in the direction of roll progression (Machine Direction (MD)), and relatively, is mostly formed around the binder on the surface of the electrode. Despite the fiberization of the binder, the electrode active material, the conductive material and the binder in the electrode are still present in the form of small particles, so the electrode may lack durability. The durability of an electrode can be related to the lifetime of the electrode, which can directly affect the performance of a battery.

As the user demand for a secondary battery having high energy density is rapidly increasing, research on thicker electrodes (thick film electrodes) has been ongoing in the relevant technical field. The conventional methods of manufacturing an electrode by coating a slurry containing an electrode active material in a wet manner are accompanied by the migration of a conductive material and a binder to the top of the coating layer during drying, and accordingly, it is not easy to maintain the quality of the manufactured electrode while increasing the thickness of the electrode due to the poor conductivity and the low adhesion between the current collector and the electrode active material. Unless maximizing the functionality of the fiberized binder, even a novel method of manufacturing an electrode in a dry manner also lacks the adhesion between the particles of the electrode active material, the conductive material and the binder, so that it is difficult to manufacture a durable electrode with high thickness.

Therefore, the inventor of the present invention completed the present invention after continuous research on a method of manufacturing a durable thick film electrode by increasing the functionality of the binder while using a dry method.

### [Prior art reference]

### [patent reference]

(Patent reference 1) Korean Patent Laid-open Publication No. 10-2014-0136952

KR 100201056 B1 discloses a positive electrode for a lithium secondary battery prepared by mixing a binder, an electrode active material, and a conductive material, followed by pressing the mixture into sheets. The binder used comprises core-shell composite particles having a PTFE core and a polymethylmethacrylate (PMMA) shell, with the PMMA content being 16.2 wt.%.

### [Disclosure]

### [Technical Problem]

The present invention seeks to provide an electrode for a lithium secondary battery using a binder comprising polytetrafluoroethylene modified with an acrylic polymer, which is easy to handle and can improve the functionality of the battery when applied.

### [Technical Solution]

According to a first aspect of the present invention, an electrode for a lithium secondary battery prepared by mixing a binder, an electrode active material and a conductive material, and then pressing them, wherein the binder comprises composite particles with a polytetrafluoroethylene structure coated with an acrylic polymer, wherein the acrylic polymer is a copolymer of monomers comprising 40% to 90% by weight of methyl methacrylate, based on the total weight of the monomers, the acrylic polymer is a copolymer of monomers comprising methyl methacrylate and n-butyl acrylate, the acrylic polymer is coated on polytetrafluoroethylene in an amount of 5% to 40% by weight, based on the total weight of the composite particles is provided.

In one embodiment of the present invention, the composite particles have an average diameter of from 0.01 µm to 2 µm.

In one embodiment of the present invention, the acrylic polymer has a glass transition temperature of 60°C to 150°C.

In one embodiment of the present invention, the acrylic polymer has a weight average molecular weight of 10,000 g/mol to 300,000 g/mol.

In one embodiment of the present invention, the n-butyl acrylate is comprised in an amount of 10 parts to 60 parts by weight, based on 100 parts by weight of methyl methacrylate.

In one embodiment of the present invention, the monomer further comprises an acrylic acid or a methacrylic acid.

In one embodiment of the present invention, the acrylic acid or methacrylic acid is comprised in an amount of 0.1% to 40% by weight, based on the total weight of the monomers.

In one embodiment of the present invention, the polytetrafluoroethylene has a standard specific gravity (SSG) of 2.3 or less.

In one embodiment of the present invention, the binder is comprised in an amount of 0.1% to 10% by weight in the electrode, based on the total weight of the binder, the electrode active material, and the conductive material.

### [Effects of the Invention]

The electrode for a lithium secondary battery according to one embodiment of the present invention using the binder can solve problems such as agglomeration that can occur during handling of conventional binders by modifying polytetrafluoroethylene with an acrylic polymer.

In addition, an electrode prepared using the binder has excellent physical properties, such as low thickness deviation and high tensile strength, and when the electrode is applied to a battery, performances of the battery, such as the capacity retention rate, can be improved.

### [Description of Drawings]

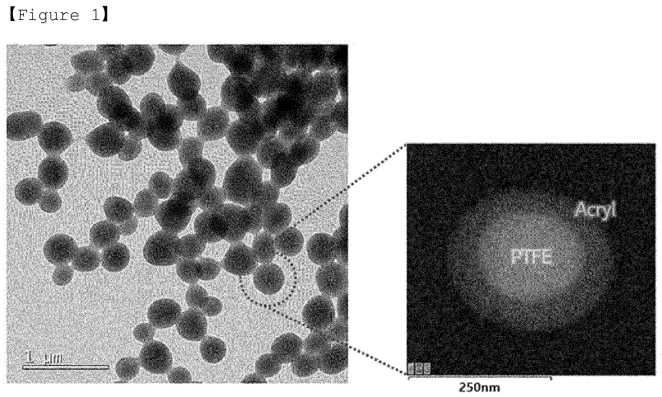

FIG. 1 is TEM and TEM-EDX mapping images showing a composite particle binder having a polytetrafluoroethylene structure coated with an acrylic polymer.

### [Best Mode]

All of the embodiments provided by the present invention can be achieved by the following description. It is to be understood that the following description describes preferred embodiments of the present invention, but the present invention is not necessarily limited thereto.

For properties described in this specification, where measurement conditions and methods are not specifically described, the properties are measured according to measurement conditions and methods commonly used by those skilled in the art.

The present invention provides an electrode for a lithium secondary battery prepared by mixing a binder, an electrode active material and a conductive material, and then pressing them, wherein the binder comprises composite particles with a polytetrafluoroethylene structure coated with an acrylic polymer, wherein the acrylic polymer is a copolymer of monomers comprising 40% to 90% by weight of methyl methacrylate, based on the total weight of the monomers, the acrylic polymer is a copolymer of monomers comprising methyl methacrylate and n-butyl acrylate, the acrylic polymer is coated on polytetrafluoroethylene in an amount of 5% to 40% by weight, based on the total weight of the composite particles. Polytetrafluoroethylene, which is commonly used in the relevant art as a binder when electrodes are manufactured by a dry method, is a long chain polymer, and maintains a stable phase below the phase transition temperature of 19°C. Whereas, at room temperature exceeding 19°C, the twisted helical chains are easily unwound and fiberization easily proceeds, so polytetrafluoroethylene is characterized by having a mutual aggregation even when a small shear force is applied. In particular, since at room temperature of around 25°C exceeding the phase transition temperature of 19°C, the powder is easily microfibrillated and agglomerated even when powder transportation and stirring where a shear force can be applied from time to time, the powder is not easily dispersed uniformly in the process of manufacturing an electrode in a dry manner. Therefore, the polytetrafluoroethylene requires high maintenance costs for refrigerated transportation and refrigerated storage during handling, and special attention to the working temperature is required. To solve the problem of polytetrafluoroethylene, the present invention modifies polytetrafluoroethylene with an acrylic polymer.

Various methods for modifying the polytetrafluoroethylene with an acrylic polymer may exist. In the present invention, the outside of the polytetrafluoroethylene particle is coated with an acrylic polymer to provide a composite particle with an acrylic polymer/polytetrafluoroethylene structure. The composite particle may also be represented by a core-shell structure, wherein the core is composed of polytetrafluoroethylene and the shell is composed of an acrylic polymer.

According to one embodiment of the present invention, coating polytetrafluoroethylene particles with an acrylic polymer can eliminate the problem of agglomeration of polytetrafluoroethylene, so that a polymeric material with a high degree of fiberization can be used for the polytetrafluoroethylene contained therein. According to one embodiment of the present invention, the polytetrafluoroethylene has a standard specific gravity (SSG) of 2.3 or less. The standard specific gravity is defined by a measurement method according to Japanese Industrial Standard (JIS) K6892. Since the standard specific gravity is negatively correlated with the average molecular weight, a lower standard specific gravity of the polytetrafluoroethylene means a higher molecular weight thereof. Considering that the higher the molecular weight, the better the degree of fiberization, the lower limit of the standard specific gravity range may not be very important, but may be, for example, 2.0 or more. Since polytetrafluoroethylene is more easily handled, the composite particles according to one embodiment of the present invention can reduce the standard specific gravity as much as possible.

FIG. 1 provides Transmission Electron Microscope (TEM) and Energy Dispersive X-ray Spectroscopy (TEM-EDX) mapping images depicting a composite particle binder having a polytetrafluoroethylene structure coated with an acrylic polymer. As shown in FIG. 1, in polytetrafluoroethylene coated with an acrylic polymer, the polytetrafluoroethylene particles do not agglomerate with each other due to the acrylic polymer located on the outside, and the core-shell composite particles can be easily separated while retaining their original shape. These composite particles are highly dispersible when mixed with an electrode active material and a conductive material in an electrode active material layer, which can increase the efficiency of binder application by fiber formation even with a small amount.

According to one embodiment of the present invention, the composite particles have an average diameter of from 0.01 µm to 2 µm. The average diameter was obtained by measuring the size of each particle distinguishable in the TEM analysis image, and then calculating the arithmetic mean value thereof. Specifically, the average diameter of the composite particles may be 0.01 µm to 2 µm, 0.01 µm to 1.5 µm, or 0.01 µm to 1 µm. Such an average diameter of the composite particles helps to increase the dispersibility of the composite particles in the electrode active material layer while making the polytetrafluoroethylene fibered to an appropriate level.

Since the polytetrafluoroethylene can easily agglomerate at room temperature, it may not be easy to control the particle size when manufacturing the composite particles because the polytetrafluoroethylene may agglomerate. Therefore, for convenience of operation, the composite particles are prepared by adding a dispersant, uniformly dispersing the polytetrafluoroethylene and then coating an acrylic polymer. Due to the characteristics of the manufacturing method, traces of dispersant may be detected between the polytetrafluoroethylene and the acrylic polymer. However, the polytetrafluoroethylene, which is the core, and the acrylic polymer, which is the shell, are not necessarily strongly bonded, and even if the bond between the core and the shell is not high due to the presence of the dispersant, it is advantageous that the core component can be more easily released in the event of melting/fracturing of the shell. The dispersant may be, but is not particularly limited to, any substance commonly used in the art that does not readily undergo side reactions with polytetrafluoroethylene and an acrylic polymer. For example, an ethylene glycol-based nonionic surfactant may be used as the dispersant, in particular, Tween 20, Tween 60, Tween 80, Brij L23, Brij 020, triton x-100, tergitol 100X.

The acrylic polymer is a copolymer. Thus, the term "polymer" used herein can be interpreted to include a copolymer. The acrylic polymer is formed by linking monomers by breaking the double bonds present in the acrylic monomers into single bonds, so that the structure of the monomers in the polymer remains substantially intact. Although the arrangement of the monomers in the copolymer is not necessarily limited to any one of random, alternating and block copolymers, random copolymers may be usually used.

The acrylic polymer is a coating layer that prevents agglomeration of polytetrafluoroethylene, and has the function of keeping polytetrafluoroethylene stable inside the coating layer until the polytetrafluoroethylene becomes fibrous through heating or pressurization by having a certain level of durability without agglomeration between different particles. Furthermore, the acrylic polymer may have the function of reinforcing the adhesion between the components in the dry electrode. The acrylic polymer may be adjusted to a certain level of physical properties in order to have the function described above.

According to one embodiment of the present invention, the acrylic polymer has a glass transition temperature of 60°C to 150°C. The glass transition temperature is measured according to the conventional measurement method using DSC (Differential Scanning Calorimeter) equipment (e.g., Q20 manufactured by TA). Specifically, the glass transition temperature of the acrylic polymer is 60°C to 150°C, 65°C to 140°C, 70°C to 130°C, or 75°C to 120°C. An acrylic polymer having a glass transition temperature within the above ranges may have better functionality.

The weight average molecular weight of the acrylic polymer can also affect functionality. According to one embodiment of the present invention, the acrylic polymer has a weight average molecular weight of 10,000 g/mol to 600,000 g/mol. The weight average molecular weight is obtained by converting the value of a standard polymethylmethacrylate as measured by a Gel Permeation Chromatograph (GPC) equipment (e.g., Alliance2695 manufactured by Waters). In specific, the acrylic polymer has a weight average molecular weight of 10,000 g/mol to 600,000 g/mol, 10,000 g/mol to 300,000 g/mol, or 100,000 g/mol to 200,000 g/mol. An acrylic polymer having a weight average molecular weight within the above ranges may have better functionality.

The properties that affect the functionality of the acrylic polymer can be controlled by adjusting the composition of the monomers constituting the polymer. The methyl methacrylate may be the main monomer consisting of an acrylic polymer, which accounts for the largest portion of the polymer. The acrylic polymer is a copolymer of monomers comprising 40% to 90% by weight of methyl methacrylate, based on the total weight of the monomers. Specifically, the content of the methyl methacrylate may be 40% to 90% by weight, or 45% to 90% by weight. By combining different types of monomers on the basis of the methyl methacrylate, the properties of the acrylic polymer can be adjusted.

The acrylic polymer is a copolymer of monomers comprising methyl methacrylate and n-butyl acrylate. The n-butyl acrylate contains an n-butyl group which is different from methyl methacrylate in the number of carbon atoms by three, which can be easily adjusted to have the properties required by the present invention even with a small amount compared to other alkyl acrylates. According to one embodiment of the present invention, the n-butyl acrylate comprises 10 parts to 60 parts by weight based on 100 parts by weight of methyl methacrylate. When the compound is polymerized with methyl methacrylate within the above range, more preferable properties can be obtained.

The acrylic polymer may further comprise novel functional groups to provide additional functionality, such as enhancing cohesion between the components in the dry electrode even after the composite particles are destroyed by heating or pressurization to release the polytetrafluoroethylene therefrom. Such functional groups may be introduced into the acrylic polymer from monomers other than alkyl acrylate or alkyl methacrylate, and the functional groups may be carboxylic acids. According to one embodiment of the present invention, the monomers constituting the acrylic polymer further comprise an acrylic acid or a methacrylic acid. According to one embodiment of the present invention, the acrylic acid or methacrylic acid is comprised in an amount of 40 wt% or less, based on the total weight of the monomers. In specific, the content of the acrylic acid or methacrylic acid may be 40% or less by weight, or 30% or less by weight. The acrylic acid or methacrylic acid is an optional component, not an essential component, in that it is introduced to provide the additional functionality described above, and therefore, the lower limit of the content may include 0% by weight. However, if the acrylic acid or methacrylic acid is included to provide additional functionality, the acrylic acid or methacrylic acid may be comprised in the acrylic polymer in an amount ranging from a very small amount of 0.1% or more by weight to the upper limit described above, for example, 0.1% to 40% by weight, 5% to 35% by weight, or 10% to 30% by weight. The acrylic acid or methacrylic acid can increase the adhesion to an electrode active material or a conductive material constituting the electrode as well as polytetrafluoroethylene due to the carboxylic acid projecting outwardly from the coating layer.

Since the acrylic polymer does not have the characteristic of being easily fibrous like polytetrafluoroethylene, it cannot replace polytetrafluoroethylene as a binder. Therefore, the acrylic polymer is not required in large amounts, provided that the functionality described above is achieved. 5% to 40% by weight of the acrylic polymer is coated on polytetrafluoroethylene, based on the total weight of the composite particles. The content of the acrylic polymer may be 5% to 40% by weight, 10% to 30% by weight, or 10% to 20% by weight. Within the above ranges, a sufficient amount of polytetrafluoroethylene can be comprised while achieving the purpose of introducing the acrylic polymer.

In the manufacture of electrodes for a lithium secondary battery, considering the processability of a mixture comprising an electrode active material, a wet method is usually used, in which a solvent such as water or an organic solvent is added to the mixture, and the mixture is applied to an electrode current collector in the form of a slurry, but it is difficult to increase the thickness of the electrode due to problems such as migration of the binder during drying and low adhesion between the electrode current collector and the electrode active material. In order to solve these problems, research has been conducted on a solvent-free dry method for manufacturing electrodes, and polytetrafluoroethylene has been utilized as a binder as a means of solving the problem of poor cohesion of an electrode active material, a conductive material and a binder during the dry method. The present invention improves the utilization value of a polytetrafluoroethylene binder by modifying it with an acrylic polymer, and specifically relates to a dry method of manufacturing electrodes for a lithium secondary battery.

According to the dry method, an electrode for a lithium secondary battery is prepared by mixing and dispersing an electrode active material, a conductive material and a binder, followed by pressurization. As the binder, a composite particle binder as disclosed above is utilized. The electrode may consist of an active layer and a current collector, wherein the active layer is a layer comprising an electrode active material, a conductive material and a binder. The current collector not only supports the active layer, but also supplies electrons to the active layer, but the current collector may not necessarily be comprised depending on the active layer. The active layer is active in the electrochemical reaction in the electrode because it contains an electrode active material, and the active layer can be described as an electrode active layer in that it contains an electrode active material, or a mixed layer in that it is formed by mixing an electrode active material, a conductive material and a binder. In addition, in the case of all-solid-state batteries, which have been the subject of intense research in recent years, a battery may further comprise a solid electrolyte.

The electrode active material may be a positive electrode active material when applied to a positive electrode, or a negative electrode active material when applied to a negative electrode. The positive electrode active material or negative electrode active material is not particularly limited as long as it is commonly used in the art.

According to one embodiment of the present invention, the positive electrode active material is a lithium transition metal oxide. In the lithium transition metal oxide, the transition metal has the form of Li₁₊ₓM_{y}O_{2+Z} (wherein 0≤x≤5, 0<y≤2, and 0≤z≤2), wherein M is selected from the group consisting of, but not particularly limited to, Ni, Co, Mn, Fe, P, Al, Mg, Ca, Zr, Zn, Ti, Ru, Nb, W, B, Si, Na, K, Mo, V, and combinations thereof. More specifically, the lithium transition metal oxide is selected from the group consisting of LiCoO₂, LiNiO₂, LiMnO₂, Li₂MnO₃, LiMn₂O₄, Li(NiₐCo_{b}Mn_{c})O₂ (0<a<1, 0<b<1, 0<c<1, a+b+c=1), LiNi_{1-y}Co_{y}O₂ (0<y<1), LiCo_{1-y}Mn_{y}O₂ (0<y<1), LiNi_{1-y}Mn_{y}O₂ (0<y<1), Li(NiₐCo_{b}Mn_{c})O₄ (0<a<2, 0<b<2, 0<c<2, a+b+c=2), LiMn_{2-z}Ni_{z}O₄ (0<z<2), LiMn_{2-z}Co_{z}O₄(0<z<2), and combinations thereof.

According to one embodiment of the present invention, the negative electrode active material is a compound capable of reversible intercalation and deintercalation of lithium. Specific examples include a carbonaceous material such as artificial graphite, natural graphite, graphitized carbon fiber, amorphous carbon, etc.; a metallic material capable of alloying with lithium such as Si, Al, Sn, Pb, Zn, Bi, In, Mg, Ga, Cd, Si alloys, Sn alloys, or Al alloys; a metal oxide capable of doping and de-doping lithium, such as SiO_{β} (wherein 0<β<2), SnO₂, vanadium oxide, or lithium vanadium oxide; or a composite including the metallic material and the carbonaceous material, such as a Si-C composite or Sn-C composite, and any one or more mixtures thereof may be used. Also, a metallic lithium thin film may be used as the negative electrode active material. Furthermore, both low-crystalline carbon and high-crystalline carbon can be used as the carbon material. Low-crystalline carbons include soft carbon and hard carbon, and high-crystalline carbons include natural or artificial graphite in amorphous, plate, in-plane, spherical, or fibrous form, and Kish graphite, pyrolytic carbon, mesophase pitch based carbon fiber, meso-carbon microbeads, mesophase pitches, and high temperature calcined carbons such as petroleum or coal tar pitch derived cokes. In addition, metal nanoparticles having lithiophilic properties can be further included. Such metal nanoparticles may be a combination of one or more selected from silver, gold, platinum, palladium, silicon, aluminum, bismuth, tin, indium, zinc, and the like, and may be specifically silver.

According to one embodiment of the present invention, the electrode active material is a lithium transition metal oxide having an average diameter of 5 µm to 30 µm of particles. In specific, the average diameter of the particles is 5 µm or more, 6 µm or more, 7 µm or more, 8 µm or more, 9 µm or more, 10 µm or more, 30 µm or less, 28 µm or less, 26 µm or less, 24 µm or less, 22 µm or less, or 20 µm or less, and may be 5 µm to 30 µm, 7 µm to 24 µm, or 10 µm to 20 µm.

The conductive material is used to provide conductivity to electrodes, and can be used without any particular limitation, provided that it is electronically conductive without causing any chemical changes when manufacturing a battery. Specific examples include graphite, such as natural or artificial graphite; carbon-based materials such as carbon black, acetylene black, ketchen black, channel black, furnace black, lamp black, summer black, single-walled or multi-walled carbon nanotubes, carbon fiber, carbon nanofiber, graphene, activated carbon, or activated carbon fiber; metal powders or metal fibers, such as copper, nickel, aluminum or silver; conductive whiskers, such as zinc oxide or potassium titanate; conductive metal oxides, such as titanium oxide; or conductive polymers, such as polyphenylene derivatives, any one of which may be used alone or in a mixture of two or more.

The conductive material may be a carbon-based material or a metallic material, wherein the metallic material may include metal powders, metal fibers, or conductive metal oxides as described above. The conductive material may be spherical or linear particles. When the conductive material consists of spherical particles, the average diameter of the particles may be 1 nm to 100 nm, particularly 5 nm to 70 nm, more particularly 10 nm to 40 nm. If the conductive material consists of linear particles, the length of the particles may be 1 µm to 10 um, particularly 2 µm to 9 µm, more particularly 3 µm to 8 µm, and the diameter of the vertical section may be 10 nm to 500 nm, particularly 50 nm to 350 nm, more particularly 100 nm to 200 nm.

The binder improves the adhesion between the electrode active material particles and the adhesion of the electrode active material to the electrode current collector. In one embodiment of the present invention, the composite particles are used as a binder, and the composite particles that do not easily agglomerate are mixed with the electrode active material and the conductive material to be uniformly dispersed. The composite particles are then fibered and pressed by equipment such as a roll, in which the acrylic polymer coating layer is destroyed to release polytetrafluoroethylene therefrom, and becomes fiberized by an applied shear force. Due to the good dispersibility of the composite particles in the active layer, the present invention can maximize the functionality of the binder. The acrylic polymer coating layer can also be destroyed by heating, so that when mixing by heating, polytetrafluoroethylene can be fibered simultaneously with mixing.

According to one embodiment of the present invention, the binder is comprised in an amount of 0.1% to 10% by weight, particularly 0.5% to 5% by weight, and more particularly 1% to 3% by weight in the active layer, based on the total weight of the electrode active material, the conductive material and the binder. The present invention is significant in that the cohesion of the entire active layer can be improved even with a small amount of binder.

The electrodes according to one embodiment of the present invention not necessarily require an electrode current collector in that the shape of the electrodes can be fixed due to fibrosis of a binder, but an electrode current collector can be utilized in that the electrodes can be a uniform pathway for electrons in the relationship between the wire and the active layer of the battery. The electrode current collector is not particularly limited as long as it is conductive without causing any chemical changes to a battery, and for example, stainless steel, aluminum, nickel, titanium, calcined carbon, or aluminum or stainless steel surface treated with carbon, nickel, titanium or silver may be used. Furthermore, the electrode current collector may have a thickness of typically 3 µm to 500 µm, and fine irregularities may be formed on the surface of the electrode current collector, thereby to increase the adhesion of the electrode active material. For example, it can be used in various forms such as film, sheet, foil, net, porous material, foam, non-woven material, etc. Additionally, the electrode current collector may be a primer coated foil, wherein the current collector material may include a surface layer coated with a mixture of a conductive carbon material and a binder.

The electrodes can be applied to a lithium secondary battery. The lithium secondary battery is typically manufactured by interposing a separating film between the positive electrode and the negative electrode, and then injecting electrolyte, but can be modified in various ways, such as by mixing solid electrolytes as needed.

The separating film, which separates the negative electrode from the positive electrode and provides a migration passage for lithium ions, can be used without special limitation as long as it is used as a separating film in a conventional lithium secondary battery, and it is preferable to have a low resistance to ion migration of the electrolyte and an excellent ability to moisten the electrolyte. In specific, a porous polymeric film, for example, a porous polymeric film made of a polyolefin-based polymer such as an ethylene homopolymer, a propylene homopolymer, an ethylene/butene copolymer, an ethylene/hexene copolymer or an ethylene/methacrylate copolymer, or a laminated structure of two or more layers thereof, may be used. Conventional porous nonwoven fabrics may also be used, for example, nonwoven fabrics made of high melting point glass fibers or polyethylene terephthalate fibers. In addition, a coated separating film containing a ceramic component or a polymeric material for securing heat resistance or mechanical strength may be used, optionally in a single-layer or multilayer structure.

The electrolytes include, but are not limited to, liquid electrolytes and solid electrolytes that can be used in the manufacture of a lithium secondary battery.

For example, the liquid electrolyte may include an organic solvent and a lithium salt.

The organic solvent can be used without any particular limitation as long as it can serve as a medium through which the ions involved in the electrochemical reaction of the battery can move. Specifically, the organic solvent includes an ester-based solvent such as methyl acetate, ethyl acetate, γ-butyrolactone, or ε-caprolactone; an ether-based solvent, such as dibutyl ether or tetrahydrofuran; a ketone-based solvent, such as cyclohexanone; an aromatic hydrocarbon-based solvent, such as benzene or fluorobenzene; a carbonate-based solvent such as dimethylcarbonate (DMC), diethylcarbonate (DEC), methylethylcarbonate (MEC), ethylmethylcarbonate (EMC), ethylene carbonate (EC), or propylene carbonate (PC); an alcohol-based solvent, such as ethyl alcohol, or isopropyl alcohol; nitriles, such as R-CN (where R is a straight, branched, or cyclic hydrocarbon group having 2 o 20 carbon atoms, and may include a double bonded aromatic or ether bond); amides, such as dimethylformamide; dioxolanes, such as 1,3-dioxolane; or sulfolanes. Among these solvents, a carbonate-based solvent is preferred, and a mixture of a cyclic carbonate (e.g., ethylene carbonate or propylene carbonate) having a high ionic conductivity and a high dielectric constant that can increase the charge and discharge performance of the battery and a linear carbonate-based compound (e.g., ethyl methyl carbonate, dimethyl carbonate or diethyl carbonate) having a low viscosity is more preferred. In this case, a mixture of cyclic carbonate and chained carbonate in a volume ratio of about 1:1 to about 1:9 may result in a superior performance of the electrolyte.

The lithium salts may be used without any limitation as long as they are compounds capable of providing lithium ions for use in a lithium secondary battery. In specific, the lithium salts may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI or LiB(C₂O₄)₂. Preferably, the concentration of the lithium salts is in the range of 0.1 to 2.0 M. When the concentration of the lithium salts is within the above range, the electrolyte has suitable conductivity and viscosity, so that it can exhibit good electrolyte performance, and the lithium ions can be effectively transported.

In addition to the above electrolyte components, the electrolyte may also contain, for example, one or more additives such as haloalkylene carbonate-based compounds such as difluoroethylene carbonate, pyridine, triethylphosphite, triethanolamine, cyclic ether, ethylenediamine, N-glyme, hexaphosphate triamide, nitrobenzene derivatives, sulfur, quinone imine dyes, N-substituted oxazolidinones, N,N-substituted imidazolidines, ethylene glycol dialkyl ether, ammonium salts, pyrroles, 2-methoxyethanol, or aluminum trichloride for the purpose of improving the life characteristics of the battery, inhibiting the reduction of the battery capacity, and improving the discharge capacity of the battery. The additives may be comprised in an amount of 0.1% to 5% by weight based on the total weight of the electrolyte.

In that the electrodes according to one embodiment of the present invention are manufactured in a dry manner, a solid electrolyte may also be preferably used. The solid electrolyte may comprise an ionically conductive solid electrolyte material. The ionically conductive solid electrolyte material may comprise one or more of a polymeric solid electrolyte and an inorganic solid electrolyte. The polymeric solid electrolyte may comprise a polymeric resin and a lithium salt, and may be a solid polymeric electrolyte in the form of a mixture of a solvated lithium salt and a polymeric resin, or a polymeric gel electrolyte in which an organic electrolyte containing an organic solvent and a lithium salt is comprised in a polymeric resin. Hereinafter, without providing the duplicate description of the liquid electrolyte, the ionically conductive solid electrolyte material is described in detail.

The solid polymeric electrolyte comprises a polymeric resin, and may comprise one or more materials selected from the group consisting of, but not necessarily limited to, polyether-based polymers, polycarbonate-based polymers, acrylate-based polymers, polysiloxane-based polymers, phosphazene-based polymers, polyethylene derivatives, alkylene oxide derivatives, phosphate ester polymers, poly agitation lysine, polyester sulfides, polyvinyl alcohol, polyvinylidene fluoride, and polymers comprising ionic dissociation groups. Furthermore, the solid polymer electrolyte may comprise one or more materials selected from the group consisting of, but not necessarily limited to, a branched copolymer obtained by copolymerizing an amorphous polymer such as PMMA, polycarbonate, polysiloxane (PDMS), and/or phosphazene with a comonomer in a poly ethylene oxide (PEO) main chain, a comb-like polymer, and a cross-linked polymer resin.

The polymeric gel electrolyte comprises an organic electrolyte comprising a lithium salt and a polymeric resin, wherein the organic electrolyte may comprise 60 to 400 parts by weight of the polymeric resin. Polymeric resins applicable to the gel electrolyte, for example, may be one or more materials selected from the group consisting of, but not necessarily limited to, polyvinyl chloride (PVC), poly(methyl methacrylate) (PMMA), polyacrylonitrile (PAN), polyvinylidene fluoride (PVdF), and polyvinylidene fluoride-hexafluoropropylene (PVdF-HFP).

The inorganic solid electrolyte may comprise a sulfide-based solid electrolyte, a halide-based solid electrolyte, an oxide-based solid electrolyte, or one or more thereof.

The sulfide-based solid electrolyte includes a sulfur atom among the electrolyte components, but are not limited to any particular component, and may include one or more of crystalline solid electrolytes, amorphous solid electrolytes (glassy solid electrolytes), and glass-ceramic solid electrolytes. Specific examples of the sulfide-based solid electrolytes include, but are not necessarily limited to, LPS-type sulfides comprising sulfur and phosphorus, Li₄₋ₓGe₁₋ₓPₓS₄ (wherein x is 0.1 to 2, specifically x is 3/4 or 2/3), Li_{10±1}MP₂X₁₂ (wherein M is Ge, Si, Sn or Al, and X is S or Se), Li_{3.833}Sn_{0.833}As_{0.166}S₄, Li₄SnS₄, Li_{3.25}Ge_{0.25}P_{0.75}S₄, Li₂S-P₂S₅, B₂S₃-Li₂S, XLi₂S-(100-x)P₂S₅ (wherein x is 70 to 80), Li₂S-SiS₂-Li₃N, Li₂S-P₂S₅-LiI, Li₂S-SiS₂-LiI or Li₂S-B₂S₃-LiI.

The halide-based solid electrolyte may include, but is not necessarily limited to, at least one of Li₃YCl₆ and Li₃YBr₆.

The oxide-based solid electrolytes may be suitably selected from and used, for example, but not necessarily limited to, LLTs with a perovskite structure such as Li₃ₓLa_{2/3-x}TiO₃, LISICONs such as Li₁₄Zn(GeO₄)₄, LATPs such as Li_{1.3}Al_{0.3}Ti_{1.7}(PO₄)₃, LAGPs such as (Li₁₊ₓGe₂₋ₓAlₓ(PO₄)₃), or phosphate-based such as LiPONs.

As described above, the lithium secondary battery comprising the electrode according to the present invention exhibits excellent discharge capacity, output characteristics, and capacity retention rate in a stable manner, and is therefore useful in portable devices such as mobile phones, notebook computers, digital cameras, and electric vehicles such as hybrid electric vehicles (HEVs).

A battery module comprising the lithium secondary battery as a unit cell and a battery pack comprising same are provided.

The battery module or battery pack may be used in, but is not necessarily limited to, power tools; electric vehicles including an electric vehicle (EV), a hybrid electric vehicle, and a plug-in hybrid electric vehicle (PHEV); electric two-wheelers including an electric bicycle (E-bike) and an electric scooter; electric golf carts; urban air mobilities (UAM); or power storage systems.

Hereinafter, Examples are presented to facilitate an understanding of the present invention. The following Examples are provided to illustrate the present invention, but the present invention is not limited thereto.

### Preparation Examples (Preparation of Composite Particles)

### Preparation Example 1: Using an acrylic polymer polymerized with 100% by weight of methyl methacrylate monomers (not according to the invention)

A polytetrafluoroethylene aqueous dispersion (DISP30 manufactured by Chemours) with an average particle diameter of 0.22 µm, a solids concentration of 60%, and a standard specific gravity (SSG) of 2.22 after sintering was prepared.

Then, 1020.0 g of polytetrafluoroethylene aqueous dispersion and 1843.4 g of distilled water were added to a 4 L reactor, stirred at a speed of 350 RPM, and heated to 75°C while nitrogen bubbling. After reaching the polymerization temperature of 75°C, the nitrogen bubbling was stopped, and after 15 minutes, 153 g of methyl methacrylate (MMA) was added to the reactor dropwise over 15 minutes. Fifteen minutes after the monomer was added, an aqueous solution of 10 g distilled water and 0.77 g ammonium persulfate was added to the reactor dropwise over approximately 10 minutes. The polymerization reaction proceeded for 4 hours from the end of the ammonium persulfate addition and then the mixture was cooled to 30°C to obtain a white emulsion.

The white, polymerized emulsion was diluted 1,000-fold and analyzed for size using NICOMP 380 (manufactured by Entegris, Dynamic Light Scattering) and listed in Table 1 below. For structural analysis of the particles, a drop of the emulsion diluted in water was placed on a grid for a transmission electron microscope (TEM) and dried at room temperature. The structure of the dried sample was analyzed using a TEM/EDS (TECNAI TF20 manufactured by FEI) with an acceleration voltage of 200 kV and is shown in Figure 1 below.

Further, the emulsion was lyophilized under the condition of -60°C and 10 mTorr for 72 hours to obtain a white powder.

In the manner described above, an acrylic polymer polymerized with 100% by weight of methyl methacrylate monomer, a material constituting the exterior of the composite particles, having a weight average molecular weight (M_{w}) of 543,000 g/mol, and a glass transition temperature (T_{g}) of 120.2°C was coated on polytetrafluoroethylene, a material constituting the interior of the composite particles, to prepare composite particles having an average diameter of 0.3 µm. The weight ratio of polytetrafluoroethylene and an acrylic polymer in the prepared composite particles was 80:20.

### Preparation Example 2: Using an acrylic polymer polymerized with 90% by weight of methyl methacrylate and 10% by weight of n-butyl acrylate monomer

Except that a mixed monomer of 137.7 g of methyl methacrylate and 15.3 g of n-butyl acrylate, and 0.21 g of the chain mover n-octylmercaptan were applied, the same method as Preparation Example 1 was used.

In the manner described above, an acrylic polymer polymerized with 90% by weight of methyl methacrylate and 10% by weight of n-butyl acrylate monomer constituting the exterior of the composite particles (having a weight average molecular weight (M_{w}) of 182,000 g/mol, and glass transition temperature (T_{g}) of 101.4°C) was coated on polytetrafluoroethylene, the same material constituting the interior of the composite particles as Preparation Example 1, to prepare composite particles (having an average diameter of the particles of 0.3*µ*m, and a weight ratio of polytetrafluoroethylene and the acrylic polymer of 80:20).

### Preparation Example 3: Using an acrylic polymer polymerized with 80% by weight of methyl methacrylate and 20% by weight of n-butyl acrylate monomer

Except that a mixed monomer of 122.4 g of methyl methacrylate and 30.6 g of n-butyl acrylate, and 0.21 g of the chain mover n-octylmercaptan were applied, the same method as Preparation Example 1 was used.

In the manner described above, an acrylic polymer polymerized with 80% by weight of methyl methacrylate and 20% by weight of n-butyl acrylate monomer constituting the exterior of the composite particles (having a weight average molecular weight (M_{w}) of 193,000 g/mol, and a glass transition temperature (T_{g}) of 79.4°C) was coated on polytetrafluoroethylene, the same material constituting the interior of the composite particles as in Preparation Example 1, to prepare composite particles (having an average diameter of the particles of 0.3 µm, and a weight ratio of polytetrafluoroethylene and the acrylic polymer of 80:20).

### Preparation Example 4: Using an acrylic polymer polymerized with 70% by weight of methyl methacrylate and 30% by weight of n-butyl acrylate monomer

Except that a mixed monomer of 107.1 g of methyl methacrylate and 45.9 g of n-butyl acrylate, and 0.37 g of the chain mover n-octylmercaptan were applied, the same method as Preparation Example 1 was used.

In the manner described above, an acrylic polymer polymerized with 70% by weight of methyl methacrylate and 30% by weight of n-butyl acrylate monomer constituting the exterior of the composite particles (having a weight average molecular weight (M_{w}) of 128,000 g/mol, and a glass transition temperature (T_{g}) of 54.4°C), was coated on polytetrafluoroethylene, the same material constituting the interior of the composite particles as in Preparation Example 1, to prepare composite particles (having an average diameter of the particles of 0.3 µm, and a weight ratio of polytetrafluoroethylene and the acrylic polymer of 80:20).

### Preparation Example 5: Using an acrylic polymer polymerized with 50% by weight of methyl methacrylate and 50% by weight of methacrylic acid monomer

Except that mixed monomer of 76.5 g of methyl methacrylate, 76.5 g of methacrylic acid, and 0.21 g of the chain mover n-octylmercaptan were applied, the same method as Preparation Example 1 was used.

In the manner described above, an acrylic polymer polymerized with 50% by weight of methyl methacrylate and 50% by weight of methacrylic acid monomer constituting the exterior of the composite particles (having a weight average molecular weight (M_{w}) of 188,000 g/mol, and a glass transition temperature (T_{g}) of 140.4°C) was coated on polytetrafluoroethylene, the same material constituting the interior of the composite particles as in Preparation Example 1, to prepare composite particles (having an average diameter of the particles of 0.3 µm, and a weight ratio of polytetrafluoroethylene and the acrylic polymer of 80:20).

### Preparation Example 6: Using an acrylic polymer polymerized with 70% by weight of methyl methacrylate and 30% by weight of methacrylic acid monomer (not according to the invention)

Except that a mixed monomer of 107.1 g of methyl methacrylate and 45.9 g of methacrylic acid, and 0.21 g of the chain mover n-octylmercaptan were applied, the same method as Preparation Example 1 was used.

In the manner described above, an acrylic polymer polymerized with 70% by weight of methyl methacrylate and 30% by weight of methacrylic acid monomer constituting the exterior of the composite particles (having a weight average molecular weight (M_{w}) of 203,000 g/mol, and a glass transition temperature (T_{g}) of 131.2°C) was coated on polytetrafluoroethylene, the same material constituting the interior of the composite particles as in Preparation Example 1, to prepare composite particles (having an average diameter of the particles of 0.3 µm, and a weight ratio of polytetrafluoroethylene and the acrylic polymer of 80:20).

### Preparation Example 7: Using an acrylic polymer polymerized with 90% by weight of methyl methacrylate and 10% by weight of methacrylic acid monomer (not according to the invention)

Except that a mixed monomer of 137.1 g of methyl methacrylate and 15.3 g of methacrylic acid, and 0.21 g of the chain mover n-octylmercaptan were applied, the same method as Preparation Example 1 was used.

In the manner described above, an acrylic polymer polymerized with 90% by weight of methyl methacrylate and 10% by weight of methacrylic acid monomer constituting the exterior of the composite particles (having a weight average molecular weight (M_{w}) of 211,000 g/mol, and a glass transition temperature (T_{g}) of 122.4°C) was coated on polytetrafluoroethylene, the same material constituting the interior of the composite particles as in Preparation Example 1, to prepare composite particles (having an average diameter of the particles of 0.3 µm, and a weight ratio of polytetrafluoroethylene and the acrylic polymer of 80:20).

### Preparation Example 8: Using an acrylate polymerized with 45% by weight of methyl methacrylate, 25% by weight of n-butyl acrylate, and 30% by weight of methacrylic acid monomer

Except that a mixed monomer of 68.85 g of methyl methacrylate, 38.25 g of n-butyl acrylate and 45.9 g of methacrylic acid, and 0.28 g of the chain mover n-octylmercaptan were applied, the same method as Preparation Example 1 was used.

In the manner described above, an acrylic polymer polymerized with 45% by weight of methyl methacrylate, 25% by weight of n-butyl acrylate, and 30% by weight of methacrylic acid monomer constituting the exterior of the composite particles (having a weight average molecular weight (M_{w}) of 168,000 g/mol, and a glass transition temperature (T_{g}) of 81.6°C) was coated on polytetrafluoroethylene, the same material constituting the interior of the composite particles as in Preparation Example 1, to prepare composite particles (having an average diameter of the particles of 0.3*µ*m, and a weight ratio of polytetrafluoroethylene and the acrylic polymer of 80:20).

### Preparation Example 9: Preparation of composite particles with a 90:10 weight ratio of polytetrafluoroethylene and an acrylic polymer

Except that 1147.5 g of polytetrafluoroethylene aqueous dispersion and 1807.7 g of distilled water were used, and a mixed monomer of 61.2 g of methyl methacrylate and 15.3 g of n-butyl acrylate, and 0.38 g of initiator ammonium persulfate and 0.11 g of chain mover n-octylmercaptan were applied, the same method as Preparation Example 1 was used.

In the manner described above, an acrylic polymer polymerized with 80% by weight of methyl methacrylate and 20% by weight of n-butyl acrylate monomer constituting the exterior of the composite particles (having a weight average molecular weight (M_{w}) of 185,000 g/mol, and a glass transition temperature (T_{g}) of 80.1°C) was coated on polytetrafluoroethylene, the same material constituting the interior of the composite particles as in Preparation Example 1, to prepare composite particles (having an average diameter of the particles of 0.3 µm, and a weight ratio of polytetrafluoroethylene and the acrylic-based polymer of 90:10).

### Preparation Example 10: Preparation of composite particles with a 70:30 weight ratio of polytetrafluoroethylene and an acrylic polymer

Except that 892.5 g of polytetrafluoroethylene aqueous dispersion and 1879.1 g of distilled water were used, and a mixed monomer of 183.6 g of methyl methacrylate and 45.9 g of n-butyl acrylate, and 1.15 g of initiator ammonium persulfate and 0.32 g of chain mover n-octylmercaptan were applied, the same method as Preparation Example 1 was used.

In the manner described above, an acrylic polymer polymerized with 80% by weight of methyl methacrylate and 20% by weight of n-butyl acrylate monomer constituting the exterior of the composite particles (having a weight average molecular weight (M_{w}) of 183,000 g/mol, and a glass transition temperature (T_{g}) of 79.9°C) was coated on polytetrafluoroethylene, the same material constituting the interior of the composite particles as in Preparation Example 1, to prepare composite particles (having an average diameter of the particles of 0.3 µm, and a weight ratio of polytetrafluoroethylene and the acrylic-based polymer of 70:30).

### Preparation Example 11: Preparation of composite particles with a 50:50 weight ratio of polytetrafluoroethylene and an acrylic polymer

Except that 637.5 g of polytetrafluoroethylene aqueous dispersion and 1950.5 g of distilled water were used, and a mixed monomer of 306.0 g of methyl methacrylate and 76.5 g of n-butyl acrylate, and 1.91 g of initiator ammonium persulfate and 0.54 g of chain mover n-octylmercaptan were applied, the same method as Preparation Example 1 was used.

In the manner described above, an acrylic polymer polymerized with 80% by weight of methyl methacrylate and 20% by weight of n-butyl acrylate monomer constituting the exterior of the composite particles (having a weight average molecular weight (M_{w}) of 180,000 g/mol, and a glass transition temperature (T_{g}) of 80.5°C) was coated on polytetrafluoroethylene, the same material constituting the interior of the composite particles as in Preparation Example 1, to prepare composite particles (having an average diameter of the particles of 0.3 µm, and a weight ratio of polytetrafluoroethylene and the acrylic-based polymer of 50:50).

### Preparation Example 12: Preparation of composite particles of polytetrafluoroethylene (standard specific gravity (SSG): 2.31) and an acrylic polymer in a weight ratio of 80:20

Except that a polytetrafluoroethylene aqueous dispersion (manufactured by Chemours) with an average particle diameter of 0.22 µm, a solids concentration of 60%, and a standardized specific gravity (SSG) of 2.31 after sintering was applied, the same method as Preparation Example 1 was used.

In the manner described above, an acrylic polymer polymerized with 100% by weight of methyl methacrylate monomer constituting the exterior of the composite particles (having a weight average molecular weight (M_{w}) of 505,000 g/mol, and a glass transition temperature (T_{g}) of 121.0°C) was coated on polytetrafluoroethylene, the material constituting the interior of the composite particles, to prepare composite particles having an average diameter of 0.3 µm. The weight ratio of polytetrafluoroethylene and acrylic polymer in the prepared composite particles was 80:20.

### Example (Electrodes with Composite Particles)

### Example 1: Using the composite particles of Preparation Example 1 (not according to the invention)

95.5% by weight of the positive electrode active material NCM particle powder (GL80 manufactured by LG Chem) with an average particle diameter of 10*µ*m, 1.5% by weight of the conductive material (Li-250 manufactured by Denka), and 3.0% by weight of the composite particles of Preparation Example 1 as a binder were prepared. The prepared electrode active material, the conductive material, and the binder were mixed using a Lab Blender (manufactured by Waring) at 10,000 RPM, repeatedly 10 times for 30 seconds each, to prepare a mixture for dry electrodes. The mixture underwent high shear mixing for 5 minutes at 100°C, while applied with shear force at 100 RPM through a Twin Screw Kneader equipment (manufacturered by Irie Shokai) to proceed with the fiberization under heating conditions. Next, the secondary mixture in the form of dough was prepared using a Two Roll Mill equipment (manufacturered by Inoue) at 100°C to produce a 200*µ*m thick free-standing film.

### Example 2: Using the composite particles of Preparation Example 2

The electrodes were prepared in the same way as in Example 1, except that the composite particles of Preparation Example 2 were used as a binder.

### Example 3: Using the composite particles of Preparation Example 3

The electrodes were prepared in the same way as in Example 1, except that the composite particles of Preparation Example 3 were used as a binder.

### Example 4: Using the composite particles of Preparation Example 4

The electrodes were prepared in the same way as in Example 1, except that the composite particles of Preparation Example 4 were used as a binder.

### Example 5: Using the composite particles of Preparation Example 5

The electrodes were prepared in the same way as in Example 1, except that the composite particles of Preparation Example 5 were used as a binder.

### Example 6: Using the composite particles of Preparation Example 6 (not according to the invention)

The electrodes were prepared in the same way as in Example 1, except that the composite particles of Preparation Example 6 were used as a binder.

### Example 7: Using the composite particles of Preparation Example 7 (not according to the invention)

The electrodes were prepared in the same way as in Example 1, except that the composite particles of Preparation Example 7 were used as a binder.

### Example 8: Using the composite particles of Preparation Example 8

The electrodes were prepared in the same way as in Example 1, except that the composite particles of Preparation Example 8 were used as a binder.

### Example 9: Using the composite particles of Preparation Example 3 (binder content: 1.5% by weight)

The electrodes were prepared in the same way as in Example 3, except that the electrode active material was adjusted to be comprised in an amount of 95.5% by weight, the conductive material was adjusted to be comprised in an amount of 1.5% by weight, and the binder was adjusted to be comprised in an amount of 1.5% by weight.

### Example 10: Using the composite particles of Preparation Example 9

The electrodes were prepared in the same way as in Example 1, except that the composite particles of Preparation Example 9 were used as a binder.

### Example 11: Using the composite particles of Preparation Example 10

The electrodes were prepared in the same way as in Example 1, except that the composite particles of Preparation Example 10 were used as a binder.

### Comparative Example 1: Using the composite particles of Preparation Example 11

The electrodes were prepared in the same way as in Example 1, except that the composite particles of Preparation Example 11 were used as a binder.

### Comparative Example 2: Using polytetrafluoroethylene particles

The electrodes were prepared in the same way as in Example 1, except that the composite particles of Preparation Example 12 were used as a binder.

### Comparative Example 3: Using polytetrafluoroethylene particles (binder content: 1.5% by weight)

The electrodes were prepared in the same way as in Comparative Example 2, except that the electrode active material was adjusted to be comprised in an amount of 97.0% by weight, the conductive material was adjusted to be comprised in an amount of 1.5% by weight, and the binder was adjusted to be comprised in an amount of 1.5% by weight.

### Comparative Example 4: Using polytetrafluoroethylene particles (mixed at room temperature)

The electrodes were prepared in the same way as in Comparative Example 2, except that the prepared electrode active material, the conductive material and the binder were mixed at room temperature.

### Experimental Example (evaluation on electrodes)

### Experimental Example 1: Evaluation of thickness variation and tensile strength of free-standing film-like electrodes

The free-standing film-like electrodes prepared according to Examples 1 to 11 and Comparative Examples 1 to 4 were sampled to a width of 20 mm, a length of 20 mm, and a thickness of 200 µm, and the thickness deviation and tensile strength of the samples were measured. The thickness deviation was measured using an electrode thickness measurement device (Millimar manufactured by Mahr), and the tensile strength was measured using UTM equipment (manufactured by LLOYD). The tensile strength is the maximum value of the force applied to the film at an angle of 180 degrees and a speed of 50 mm/min to the point where no breakage occurs. The results for the thickness deviation and tensile strength are shown in Table 1 below.

**[Table 1]**

| Electrodes | Thickness Deviation (%) | Tensile strength (gf/cm)² |
|---|---|---|
| Example 1 | ±0.4 | 2485 |
| Example 2 | ±0.4 | 2597 |
| Example 3 | ±0.4 | 2629 |
| Example 4 | ±0.5 | 2653 |
| Example 5 | ±0.5 | 2498 |
| Example 6 | ±0.5 | 2546 |
| Example 7 | ±0.5 | 2601 |
| Example 8 | ±0.6 | 2712 |
| Example 9 | ±0.3 | 2467 |
| Example 10 | ±0.5 | 2732 |
| Example 11 | ±0.4 | 2425 |
| Comparative Example 1 | ±0.3 | 2148 |
| Comparative Example 2 | ±8.8 | 1983 |
| Comparative Example 3 | ±6.2 | 1746 |
| Comparative Example 4 | ±10.4 | 1631 |

According to Table 1 above, the electrodes according to Examples 1 to 11 had a small thickness deviation and a tensile strength of more than 2,400 gf/cm², which was found to be a good physical property. On the other hand, the electrodes according to Comparative Examples 1 to 4 had a tensile strength of 2,200 gf/cm² or less, which was found to be an insufficient physical property. In addition, polytetrafluoroethylene with a high standard specific gravity (SSG) of 2.31 was found to have a significantly larger thickness variation in the electrodes according to Comparative Examples 2 to 4.

### Experimental Example 2: Evaluation the performance of a battery applied with electrodes

After preparing a 200 µm thick free-standing film according to Examples 1 to 10 and Comparative Examples 1 to 5, the free-standing film was placed on one side of a 20 µm thick Primer Coated Aluminum Foil (manufactured by Dongwon Systems) current collector, and the positive electrode was prepared by bonding through a lamination roll maintained at 120°C. Lithium metal was used as the counter electrode, and an electrolyte containing 1 M of LiPF₆ was added to a solvent of EC:DMC:DEC (having a volume ratio of 1:2:1) to prepare the half battery.

After the manufactured coin half battery was subjected to 100 charge and discharge cycles at 25°C under the voltage range of 3 to 4.3V and current condition of 0.33 C-rate, the capacity retention ratio of 100 discharges to one discharge was calculated, and the results are shown in Table 2 below.

**[Table 2]**

| Electrodes | 0.33C / 0.33C Life at Room Temperature (Capa. Efficiency, % @ 100th cycle) |
|---|---|
| Example 1 | 96.5 |
| Example 2 | 97.1 |
| Example 3 | 97.4 |
| Example 4 | 96.9 |
| Example 5 | 96.1 |
| Example 6 | 96.3 |
| Example 7 | 96.6 |
| Example 8 | 97.1 |
| Example 9 | 96.5 |
| Example 10 | 97.1 |
| Example 11 | 95.4 |
| Comparative Example 1 | 93.9 |
| Comparative Example 2 | 94.6 |
| Comparative Example 3 | 93.1 |
| Comparative Example 4 | 91.8 |

According to Table 2 above, the electrodes according to Examples 1 to 11 have a capacity retention rate of more than 95% for 100 discharges, which is an improvement over the electrodes according to Comparative Examples 1 to 4, which have a capacity retention rate of less than 95%.

## Claims

1. An electrode for a lithium secondary battery prepared by mixing a binder, an electrode active material and a conductive material, and then pressing them,
wherein the binder comprises composite particles with a polytetrafluoroethylene structure coated with an acrylic polymer,
wherein the acrylic polymer is a copolymer of monomers comprising 40% to 90% by weight of methyl methacrylate, based on the total weight of the monomers,
the acrylic polymer is a copolymer of monomers comprising methyl methacrylate and n-butyl acrylate,
the acrylic polymer is coated on polytetrafluoroethylene in an amount of 5% to 40% by weight, based on the total weight of the composite particles.

2. The electrode according to claim 1, wherein the binder is comprised in an amount of 0.1% to 10% by weight in the electrode, based on the total weight of the binder, the electrode active material, and the conductive material.

3. The electrode according to claim 1, wherein the composite particles have an average diameter of 0.01 µm to 2 µm, and the average diameter is measured as disclosed in the specification.

4. The electrode according to claim 1, wherein the acrylic polymer has a weight average molecular weight of 10,000 g/mol to 300,000 g/mol, and the weight average molecular weight is measured as disclosed in the specification.

5. The electrode according to claim 1, wherein the n-butyl acrylate is comprised in an amount of 10 parts to 60 parts by weight, based on 100 parts by weight of methyl methacrylate.

6. The electrode according to claim 1, wherein the monomer further comprises an acrylic acid or a methacrylic acid.

7. The electrode according to claim 6, wherein the acrylic acid or methacrylic acid is comprised in an amount of 0.1% to 40% by weight, based on the total weight of the monomers.

8. The electrode according to claim 1, wherein the polytetrafluoroethylene has a standard specific gravity (SSG) of 2.3 or less, and the standard specific gravity (SSG) is measured as disclosed in the specification.

## Patentansprüche

1. Elektrode für eine Lithium-Sekundärbatterie, hergestellt durch Mischen eines Bindemittels, eines Elektrodenaktivmaterials und eines leitfähigen Materials und anschließendes Pressen derselben,
wobei das Bindemittel Kompositpartikel mit einer Polytetrafluorethylenstruktur, beschichtet mit einem Acrylpolymer, umfasst,
wobei das Acrylpolymer ein Copolymer von Monomeren ist, umfassend 40 bis 90 Gew.-% Methylmethacrylat, bezogen auf das Gesamtgewicht der Monomere,
das Acrylpolymer ein Copolymer von Monomeren ist, umfassend Methylmethacrylat und n-Butylacrylat,
das Acrylpolymer auf Polytetrafluorethylen in einer Menge von 5 bis 40 Gew.-%, bezogen auf das Gesamtgewicht der Kompositpartikel, beschichtet ist.

2. Elektrode nach Anspruch 1, wobei das Bindemittel in einer Menge von 0,1 bis 10 Gew.-% in der Elektrode, bezogen auf das Gesamtgewicht des Bindemittels, des Elektrodenaktivmaterials und des leitfähigen Materials, enthalten ist.

3. Elektrode nach Anspruch 1, wobei die Kompositpartikel einen durchschnittlichen Durchmesser von 0,01 µm bis 2 µm aufweisen und der durchschnittliche Durchmesser wie in der Beschreibung offenbart gemessen wird.

4. Elektrode nach Anspruch 1, wobei das Acrylpolymer ein gewichtsgemitteltes Molekulargewicht von 10.000 g/mol bis 300.000 g/mol aufweist und das gewichtsgemittelte Molekulargewicht wie in der Beschreibung offenbart gemessen wird.

5. Elektrode nach Anspruch 1, wobei das n-Butylacrylat in einer Menge von 10 bis 60 Gewichtsteilen, bezogen auf 100 Gewichtsteile Methylmethacrylat, enthalten ist.

6. Elektrode nach Anspruch 1, wobei das Monomer ferner eine Acrylsäure oder eine Methacrylsäure umfasst.

7. Elektrode nach Anspruch 6, wobei die Acrylsäure oder Methacrylsäure in einer Menge von 0,1 bis 40 Gew.-%, bezogen auf das Gesamtgewicht der Monomere, enthalten ist.

8. Elektrode nach Anspruch 1, wobei das Polytetrafluorethylen ein spezifisches Standardgewicht (SSG) von 2,3 oder weniger aufweist und das spezifische Standardgewicht (SSG) wie in der Beschreibung offenbart gemessen wird.

## Revendications

1. Électrode pour accumulateur au lithium préparée par mélange d'un liant, d'un matériau d'électrode actif et d'un matériau conducteur suivi par une compression,
où le liant comprend des particules composites ayant la structure d'un polytétrafluoroéthylène et enrobées d'un polymère acrylique,
où le polymère acrylique est un copolymère formé de monomères comprenant le méthacrylate de méthyle à une quantité, rapportée au poids total des monomères, qui va de 40 % à 90 % en poids,
le polymère acrylique est un copolymère formé de monomères comprenant le méthacrylate de méthyle et l'acrylate de n-butyle,
le polymère acrylique est enrobé sur le polytétrafluoroéthylène à une quantité, rapportée au poids total des particules composites, qui va de 5 % à 40 % en poids.

2. Électrode selon la revendication 1, où le liant est compris à une quantité, rapportée au poids total du liant, du matériau d'électrode actif et du matériau conducteur, qui va de 0,1 % à 10 % en poids.

3. Électrode selon la revendication 1, où les particules composites ont un diamètre moyen qui va de 0,01 µm à 2 µm, le diamètre moyen étant mesuré comme divulgué dans la spécification.

4. Électrode selon la revendication 1, où le polymère acrylique a une masse moléculaire moyenne en poids qui va de 10 000 g/mol à 300 000 g/mol, la masse moléculaire moyenne en poids étant mesurée comme divulgué dans la spécification.

5. Électrode selon la revendication 1, où l'acrylate de n-butyle est compris à une quantité qui va de 10 parties à 60 parties en poids pour 100 parties en poids de méthacrylate de méthyle.

6. Électrode selon la revendication 1, où les monomères comprennent en outre un acide acrylique ou un acide méthacrylique.

7. Électrode selon la revendication 6, où l'acide acrylique ou l'acide méthacrylique est compris à une quantité, rapportée au poids total des monomères, qui va de 0,1 % à 40 % en poids.

8. Électrode selon la revendication 1, où le polytétrafluoroéthylène a une densité spécifique normale (SSG) inférieure ou égale à 2,3, la densité spécifique normale (SSG) étant mesurée comme divulgué dans la spécification.
